# EUROPEAN PATENT APPLICATION

(11) **EP 0 579 179 A1**
(43) Date of publication of application: **19.01.1994**
(21) Application number: 93111216.3
(22) Date of filing: 13.07.1993
(51) Int. Cl.: B60T 8/50, B60T 8/42, B60T 8/36, B62D 5/06, B60G 17/04

(54) **Fluid pressure control device**

(30) Priority: 13.07.1992 JP 185107/92
(71) Applicant: Sumitomo Electric Industries, Ltd., Osaka 541 (JP)
(72) Inventor: Hashida, Koichi, c/o Itami Works of Sumitomo, Itami-shi, Hyogo (JP); Yoshino, Masato, c/o Itami Works of Sumitomo, Itami-shi, Hyogo (JP)
(74) Representative: Lehn, Werner, Dipl.-Ing.

(57) **Abstract**

A fluid pressure control device in use for a vehicle-mounted hydraulic apparatus (5) includes a master cylinder (1), a first fluid path (C1 and C2) connecting the master cylinder (1) and the vehicle mounted hydraulic apparatus (5). An inlet valve (4) comprised of a flow control valve is provided in the course of the first fluid path (C1 and C2) for steplessly varying the amount of the pressurized fluid flow flowing into the vehicle-mounted hydraulic apparatus (5). An outlet valve (7) comprised of a solenoid valve is provided on the outlet of the brake cylinder (5) for controlling the pressurized fluid therein to discharge therefrom. A control unit (20) controls the inlet valve (4) variably to reduce the amount of the pressurized fluid flow and the outlet valve (7) to fully open so that the brake cylinder (5) is depressurized. And the inlet valve (4) variably increases the pressurized fluid flow and the outlet valve (7) fully closes so that the brake cylinder (5) is pressurized.

## Description

### BACKGROUND OF THE INVENTION

### 1. Field of the Invention

The present invention relates to a fluid pressure control device which controls a fluid pressure of the vehicle-mounted hydraulic apparatus such as a steering and a suspension and, more particularly, to an brake fluid control device particularly suitable for use in an anti-lock control brake system employing a flow control valve.

### 2. Description of the Prior Art

Conventionally, there have been proposed various flow control valves suitable for the bake fluid pressure control device, and, for example, in E.P. publication No. 434092 and U.S. Patent No. 5,127,435 issued to Takata et al. July 7, 1992. Each of flow control valves has a spool with an orifice slidable accommodated in the sleeve thereof, and such a spool is driven by an electromagnetic force. By the energizing force for the electromagnet, the differential pressure between both sides of the orifice communicating to the inlet and outlet port sides is determined. For this reason, in the flow control valve, the flow rate of the operating fluid flowing between the inlet and outlet port sides can be adjusted by adjusting the current for energizing the electromagnet.

In comparison with a solenoid valve which is electromagnetically switched-over, since the flow control valve can steplessly control the flow rate by adjusting the energizing current supplied to the electromagnet, an improved pressure control performance can be obtained, and at the same time, the operation is quite.

However, in this type of flow control valve, the inner surface wall of the sleeve between the inlet port and the outlet port constitutes the sliding area of the spool on the sleeve. It is noted that it is impossible to prevent the working fluid from leaking therebetween, although the leakage amount is very small.

In order to cope with this problem, a brake fluid pressure control device which is raised in safety through providing a plurality of outlet valves is proposed by U.S. Patent No. 4,834,469 issued to Kohno et. May 30, 1989. In this brake fluid pressure control device, since several flow control valves which are normally closed are employed as outlet valves, the leakage amount of the working fluid from the sliding area can be reduced. Even this case, however, some amount of leakage can not be eliminated. On the other hand, a flow control valve which are normally opened has no effect in respect of the prevention of the leakage, even when a plurality of said valves are employed.

### SUMMARY OF THE INVENTION

The present invention has been developed with a view to substantially solving the above described disadvantages and has for its essential object to provide an improved fluid pressure control device.

In order to achieve the aforementioned objective, a fluid pressure control device for use in a hydraulic apparatus mounted on a vehicle comprises pressure producing means for producing a pressurized fluid; fluid path means connected between said pressure producing means and said hydraulic apparatus for flowing said pressurized fluid; first valve means inserted in said fluid path means, said first valve means having an opening which varies from an opened state to a closed state so as to steplessly varying the amount of said pressurized fluid flowing through said opening; second valve means connected to said hydraulic apparatus, said second valve means operating between a fully-opened state and a fully-closed state; and control means for controlling the supply and discharge of pressurized fluid with respect to said hydraulic apparatus such that said first valve means widens said opening to increase the amount of said pressurized fluid, and said second valve means is turned to said fully-closed state so as to enable pressurization of said hydraulic apparatus, and that said first valve means narrows said opening to reduce the amount of said pressurized fluid, and said second valve means is turned to said fully-opened state so as to enable depressurization of said hydraulic apparatus.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram showing the constitution of a fluid pressure control device according to a first embodiment of the present invention in use for an anti-lock control brake system, and
Fig. 2 is a block diagram showing the constitution of a fluid pressure control device according to a second embodiment of the present invention.

### DETAILED DESCRIPTION OF THE PREFERRED EMBODIMENTS

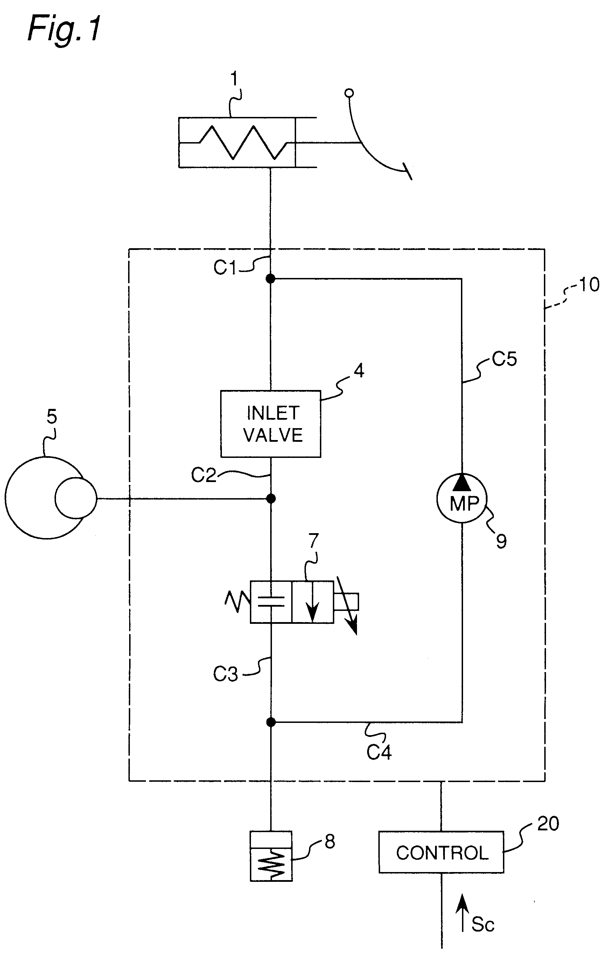

Referring to Fig. 1, a fluid pressure control device according to a first embodiment of the present invention used in an anti-lock control brake system is shown, and is hereinafter referred to as "a brake fluid pressure control device". The brake fluid pressure control device has a brake master cylinder 1, an inlet valve 4 which is normally opened, a brake cylinder 5, an outlet valve 7, a reservoir 8, a motor pump 9 for flowing the fluid to generate fluid pressure.

The inlet valve 4 is comprised of a flow control vale having a spool with an orifice driven by an electromagnetic force to varies the orifice size. According to this varied orifice size, the amount of the fluid flowing from an input port to an output port thereof can be controlled. The input and output ports of the inlet valve 4 are connected to an output port of the master cylinder 1 by a first fluid line C1 and to an input port of the outlet valve 7 by a second fluid line C2, respectively. The brake cylinder 5 is connected to the fluid line C2.

The outlet valve 7 is comprised of a solenoid valve which is normally closed, and is actuated to either fully-opened state or fully-closed state by an electromagnetic force. Then the outlet valve 7 pass the fluid therethrough or not.

The reservoir 8 is connected to the output port of the outlet valve 7 by a third fluid line C3 and temporally stores the working fluid discharged from the outlet valve 7.

The motor pump 9 has an input port connected to the third fluid line C3 by a fourth fluid line C4, and has an output port connected to the first fluid line C1 by a fifth fluid line C5. The motor pump 9 pumps up the working fluid from the reservoir 8 and/or the outlet valve 7 for returning to the first fluid line C1 extending between the master cylinder 1 and the inlet valve 4.

Thus mutually connected inlet valve 4, outlet valve 7, and motor pump 9 constitute a braking pressure unit 10. The brake fluid pressure control device further has a control unit 20 which controls the operations of the braking pressure unit 10 based on an anti-lock control signal Sc generated by an anti-lock control brake system (not shown). The inlet valve 4 can steplessly control the amount of fluid flowing from the first fluid line C1 to the second fluid line C2 by varying the current for generating the electromagnetic force suitable.

In operation, when the wheel (not shown) indicates the locking tendency, the anti-lock control brake system produces the anti-lock control signal Sc requesting a reduction of the braking pressure. On receipt of this signal Sc, the control unit 20 instructs the inlet valve 4 to close, the outlet valve 7 to open, and the motor pump 9 to drive. While the inlet valve 4 reduces the orifice size or close, the output valve 7 completely opens. As a result, the working fluid in the brake cylinder 5 is discharged to the reservoir 8 through the second fluid line C2, the outlet valve 7, and the third fluid line C3. Simultaneously the motor pump 9 is driven to return thus discharged fluid to the master cylinder 1 through the fourth, fifth and first fluid lines C4, C5, and C1. Therefore, the braking pressure in the brake cylinder 5 is reduced, and then the anti-lock control is applied to the locked wheel to release the wheel from locked condition.

Although a little amount of working fluid may leak from the inlet valve 4 at this time, since the continuation time of the anti-lock control is at the most several tens seconds and the leaked fluid is rapidly discharged through the outlet valve 7, the effect of the leakage to this extent on the fluid pressure control has no problem.

When the wheel braking pressure is lowered by the above-described control, the wheel locking tendency reduces or disappears. Then, the control unit 20 instructs the outlet valve 7 to close and the inlet valve 4 to open so that the fluid pressure can be supplied to the brake cylinder 5.

In this embodiment, since a flow control valve is employed as the inlet valve 4 which controls the amount of fluid flowing into the brake cylinder 5, the valve-opening operation can be conducted gradually with a high accuracy control and a reduced operating noise.

However, if the inlet valve 4 is replaced by a solenoid valve in stead of a flow control valve, since the solenoid valve carries out a pulse width modulating operations, the control performance will be limited and a large operating noise will be generated.

When the wheel locking tendency is finally disappeared, the motor pump 9 is stopped and the outlet valve 7 is closed by the control unit 20. Then, the anti-lock control brake system returns to a non-anti-lock operating state.

The brake fluid pressure control device according to this embodiment is a type intended to directly lower the braking force in the wheel brake.

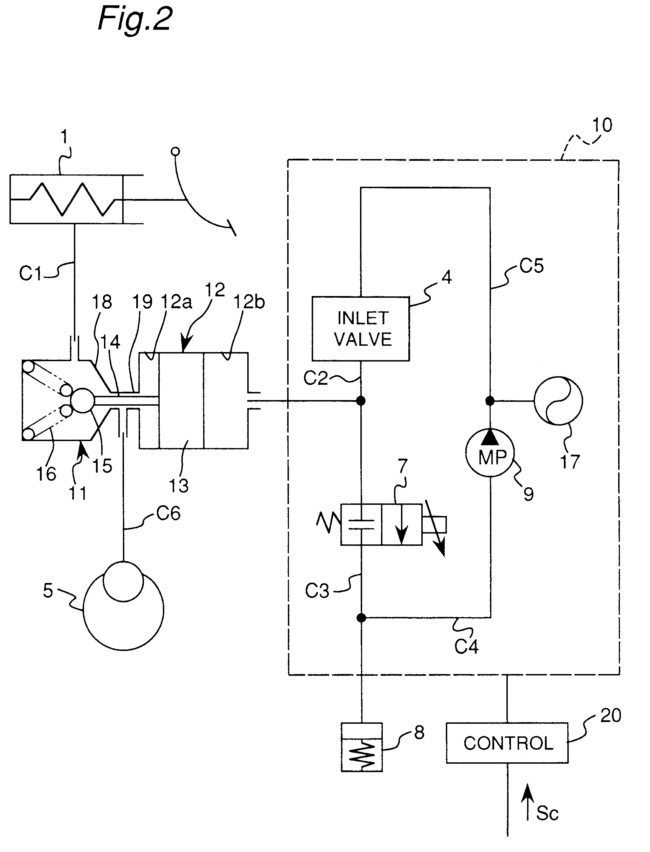

Referring to Fig. 2, a fluid pressure control device according to a second embodiment of the present invention is shown. In this embodiment, the fluid pressure control device has a construction similar to that shown in Fig. 1, and additionally includes a shut-off valve 11, a control chamber 12, and an accumulator 17. However, the master cylinder 1 and the first fluid line C1 are removed from the inlet valve 4, and are connected to an input port of the shut-off valve 11 whose output port is connected to the brake cylinder 5 by a sixth fluid line C6, as shown in Fig. 2.

The shut-off valve 11 has a cylindrical formed chamber provided with the input port in the circumference surface thereof and a conical side portion 18 having an opening at the tip thereof. The shut-off valve 11 further includes a tubular portion 19 integrally protruding around the opening thereof, and is provided with the output port on the circumference surface of the tubular portion 19. The shut-off valve 11 is provided with a spherical valve body 15 therein and is elastically urged by springs 16 toward the conical side portion to close the opening thereof.

The control chamber 12 is formed in a cylindrical shape, and is provided with a piston 13 accommodated therein such that the piston 13 fluid-tightly partitions the interior of the chamber 12 into a first sub-chamber 12a and a second sub-chamber 12b. The first and second sub-chambers 12a and 12b are connected to the tubular portion 19 and the second fluid line C2, respectively, in a fluid tight matter.

A piston shaft 14 is provided inside the tubular portion 19 for connecting the spherical valve body 15 and the piston 13, so that the spherical valve body 15 is moved according to the balance between the pressure applied by the springs 16 and the fluid pressure in the second sub-chamber 12b.

Thus, the shut-off valve 11 has a fluid path extending between input and output ports through the opening on the conical side portion 18 and the first sub-chamber 12a. This fluid path and first and sixth fluid lines construct a braking pressure path for transferring the fluid pressure in the master cylinder 1 to the brake cylinder 5. The shut-off valve 11 can communicates or shuts off this braking pressure path by moving the spherical valve body 15.

The accumulator 17 is connected to the fifth fluid line C5 for storing high fluid pressure generated by the motor pump 9, and is further connected to the second sub-chamber 12b to the accumulator 20 through the fifth fluid line C5, the inlet valve 4 and the second fluid line C2.

Next the operation of the fluid pressure control device according to the second embodiment of the present invention is described.

When anti-lock control operation is not active, the inlet valve 4 is opened and the outlet valve 7 is closed so that the high pressure fluid in the accumulator 17 enters to the second sub-chamber 12b. Finally, the pressure in the second sub-chamber 12b is equal to that in the accumulator 17. Therefore, irrespective of the braking operation by the driver, the spherical valve body 15 is moved against the springs 16 to open the fluid path of the shut-off valve 11, as best shown in Fig. 2. In this case, the fluid pressure in the master cylinder generated by the driver is directly transferred to the brake cylinder 5 through the braking pressure path.

However, when the anti-lock control operation is active, the control unit 20 instructs the flow control valve 4 to close and the outlet valve 7 to open. Since the fluid pressure from the actuator 20 is reduced or stopped by the inlet (flow control) valve 4, the high pressure fluid in the second sub-chamber 12b is discharged toward the reservoir 8 through the outlet valve 7. Then, the pressure in the second sub-chamber 12b is reduced, and the piston 13 is moved back by the pressure difference between sub-chambers 12a and 12b. In accordance with the movement of the piston 13, the clearance between the spherical valve body 15 and the inside wall of the conical side portion 18 is reduced. Furthermore, since the volume of the first sub-chamber 12a expands, the pressurized fluid in the braking pressure path is discharged to and absorbed by thus expanded first sub-chamber. Then, the amount of the fluid flowing through the brake cylinder 5 is reduced, resulting in the reduction of the fluid pressure applied to the brake cylinder 5. When the pressure in the second sub-chamber 12b is further reduced, the wheel brake pressure applied to the brake cylinder 5 is reduced down to a pressure almost equal to that in the second sub-chamber 12b. Additionally, when the piston shaft 14 is not connected to the piston 13, the piston can further moves to compress the second sub-chamber 12b by the pressure in the first sub-chamber 12a even after the spherical valve body 15 completely closes the opening of the shut-off valve. In this case, the pressurized fluid in the brake cylinder 5 can be discharged to the first sub-chamber 12a until the piston stops.

When the wheel locking tendency is finally disappeared, the inlet valve 4 is opened and the outlet valve 7 is closed by the control unit 20 to supply the high fluid pressure to the second sub-chamber 12b. Then, the anti-lock control brake system returns to a non-anti-lock operating state. It is noted that the inlet valve 4 can improve the performance of the fluid pressure control with the reduced operating noise.

As is clear from the foregoing description, in the fluid pressure control device according to the present invention used in the anti-lock control brake system, since a flow control valve is employed to frequently opened/closed for regulating the fluid amount flowing into the control chamber 12, an improved control of the brake cylinder with a reduced operation noise can be achieved. Furthermore, since the flow control valve is closed only when the anti-lock control operation is active, the effect of the minute leakage of the fluid therefrom on the anti-lock control operation is extremely small. However, since a solenoid valve is used as the outlet valve which regulates the amount of fluid discharged from the control chamber 12, no sophisticated control is required, and operating sound of the solenoid valve has a less affection to the control performance of the fluid pressure control device.

In other words, through employment of a flow control valve for an inlet valve and a solenoid valve for an outlet valve, the fluid pressure control device with an improved pressure control performance can be obtained, in which leakage of the working fluid is at a negligible level.

Although the fluid pressure control device according to preferred embodiments of the present are described with respect to an anti-lock control brake system, the present invention can be applied to general hydraulic system in which the pressure increasing process requires longer time or finer control than the pressure reducing process.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A fluid pressure control device for use in a hydraulic apparatus (5) mounted on a vehicle comprising:
pressure producing means (1 and 9) for producing a pressurized fluid;
fluid path means (C1 and C2) connected between said pressure producing means (1 and 9) and said hydraulic apparatus (5) for flowing said pressurized fluid;
first valve means (4) inserted in said fluid path means (C1 and C2), said first valve means (4) having an opening which varies from an opened state to a closed state so as to steplessly varying the amount of said pressurized fluid flowing through said opening;
second valve means (7) connected to said hydraulic apparatus (5), said second valve means (7) operating between a fully-opened state and a fully-closed state; and
control means (20) for controlling the supply and discharge of pressurized fluid with respect to said hydraulic apparatus (5) such that said first valve means (4) widens said opening to increase the amount of said pressurized fluid, and said second valve means (7) is turned to said fully-closed state so as to enable pressurization of said hydraulic apparatus (5), and that said first valve means (4) narrows said opening to reduce the amount of said pressurized fluid, and said second valve means (7) is turned to said fully-opened state so as to enable depressurization of said hydraulic apparatus (5).

2. A fluid pressure control device for use in a hydraulic apparatus (5) mounted on a vehicle comprising:
first pressure producing means (1) for producing a first pressurized fluid;
first fluid path means (C1 and C6) connected between said first pressure producing means (1) and said hydraulic apparatus (5) for flowing said first pressurized fluid;
first valve means (11) inserted in said first fluid path means (C1 and C6);
second pressure producing means (9 and 17) for producing a second pressurized fluid;
second fluid path means (C5 and C2) connected to said second pressure producing means (9 and 17) for flowing said second pressurized fluid;
buffer chamber means (12) having an internal volume divided in to a first sub-chamber (12a) connected to said first valve means (11) for storing said first pressurized fluid and a second sub-chamber (12b) connected to said second fluid path means (C5 and C2) for storing said second pressurized fluid, said first and second sub-chamber (12a and 12b) being enable to reversely varies the internal volume thereof according the balance of said first and second pressurized fluid respectively stored therein;
second valve means (4) inserted in said second fluid path means (C5 and C2), said second valve means (4) having a second opening which varies from an opened state to a closed state so as to steplessly varying the amount of said second pressurized fluid flowing through said second opening;
third valve means (7) connected to said second fluid path means (C5 and C2) between said second sub-chamber (12b) and said second valve means (4), said third valve means (7) operating between a fully-opened state and a fully-closed state; and
control means (20) for controlling the supply and discharge of said first pressurized fluid with respect to said hydraulic apparatus (5) such that said second valve means (4) widens said second opening to increase the amount of said second pressurized fluid, and said third valve means (7) is turned to said fully-closed state so as to supply said second pressurized fluid into said second sub-chamber (12b) to press the volume of said first sub-chamber (12a) against said first pressurized fluid, so that said hydraulic apparatus (5) is pressurized by said first pressurized fluid, and that said second valve means (4) narrows said second opening to reduce the amount of said second pressurized fluid, and said third valve means (7) is turned to said fully-opened state so as to discharge said second pressurized fluid from said second sub-chamber (12b), so that said first sub-chamber (12a) expands and store said first pressurized pressure more so as to enable depressurization of said hydraulic apparatus (5).
